# EUROPEAN PATENT SPECIFICATION

(11) **EP 2 364 573 B1**
(45) Date of publication and mention of the grant of the patent: **21.08.2013**
(21) Application number: 09768442.7
(22) Date of filing: 04.12.2009
(51) Int. Cl.: H05B 37/02, F21V 23/04, G08B 7/06

(54) **ILLUMINATION SYSTEM COMPRISING A PLURALITY OF ILLUMINATION DEVICES**
BELEUCHTUNGSANLAGE MIT MEHREREN LEUCHTE
SYSTEME DE ECLAIRAGE AVEC PLUSIEURS LAMPES

(30) Priority: 05.12.2008 NL 2002295
(43) Date of publication of application: 14.09.2011
(73) Proprietor: Nodazzle Holding BV, 2587 CD Den Haag (NL)
(72) Inventor: TEN WOLDE, Michel Robert, 2514 CR Den Haag (NL)
(74) Representative: Nederlandsch Octrooibureau
(86) International application number: PCT/NL2009/050738
(87) International publication number: WO 2010/064914

(56) References cited:
- EP-A- 0 744 663
- DE-A1- 4 241 862
- JP-A- 2000 133 018
- JP-A- 2000 133 019
- JP-A- 2004 302 974
- JP-A- 2006 163 837
- JP-A- 2007 087 609
- US-A- 4 293 892
- US-A1- 2008 037 116
- US-B1- 7 174 077

## Description

### TECHNICAL FIELD

The invention relates to an illumination system comprising a plurality of illumination devices. The invention further relates to such an illumination device and a building and corridor comprising such an illumination system.

### STATE OF THE ART

Illumination systems comprising a plurality of illumination devices are known in the state of the art. Such illumination systems may be used in buildings as emergency illumination, anti-panic illumination, flight route illumination and/or evacuation illumination. Such illumination systems are generally known, as illustrated by the

Installer Guide of Floodlight E-636/638 published 16-05-2005 by IG Europe Ltd, Sandbook Lane, Wetherby LS227TW, UK.

Emergency illumination may be described as illumination which enables safely leaving a room or building when the power for normal illumination fails. Emergency lighting is thus used when the supply to the normal mains lighting installation fails.

The object of anti-panic illumination is to reduce the chance of panic and enabling safe movement of people towards a flight route, by providing sufficient visibility and indicating the flight route.

Flight route and/or evacuation illumination can be described as illumination which allows safely leaving a room or building by providing sufficient visibility and flight route indications for flight routes and specific locations, and ensuring that fire fighting means and safety equipment can be found and used.

### SHORT DESCRIPTION

It is an object to provide an improved illumination system that may serve as emergency-, anti-panic, flight route and/or evacuation illumination and thus provides an improved visibility in difficult circumstances, such as smoky conditions in case of a fire.

According to an aspect there is provided an illumination device according to claim 1.

According to an aspect there is provided an illumination system , according to claim 9.

According to an aspect there is provided a corridor comprising such an illumination system.

According to an aspect there is provided a building comprising such an illumination system.

### SHORT DESCRIPTION OF THE DRAWINGS

Embodiments will now be described, by way of example only, with reference to the accompanying schematic drawings in which corresponding reference symbols indicate corresponding parts, and in which:
- Fig. 1 schematically depicts a corridor according to an embodiment,
- Fig.'s 2a and 2b schematically depict illumination devices according to an embodiment,
- Fig.'s 3a and 3b schematically depict a motion detector according to an embodiment,
- Fig. 4 and 5 depict an illumination device according to an embodiment.
- Fig. 6 schematically depicts an illumination system according to an embodiment.

### DETAILED DESCRIPTION

The embodiments describe an illumination system and illumination device that is suitable to function as emergency-, anti-panic, flight route and/or evacuation illumination and thus provides an improved visibility in difficult circumstances, such as smoky conditions in case of a fire. This is accomplished with an illumination system comprising a relatively low number of illumination devices, while still obtaining good illumination even in difficult circumstances, such as a fire.

As will be evident from the embodiments, this is accomplished by positioning the illumination devices in an advantageous way. Also, the illumination devices itself are provided with functionality that contribute to this object.

### Illumination system

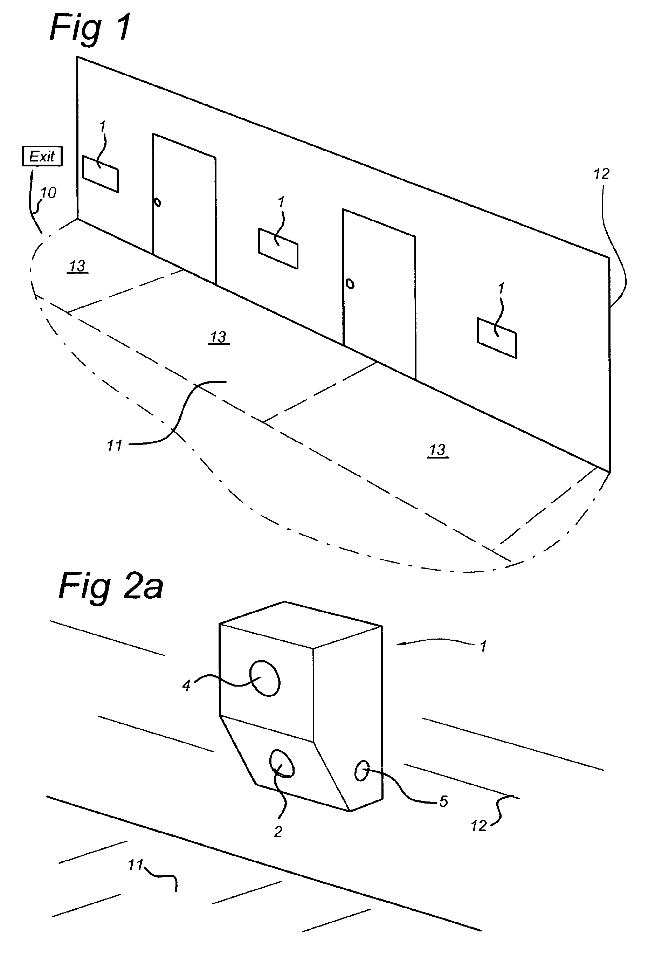

Fig. 1 schematically depicts a corridor 10 in a building, such as a hotel or hospital. The corridor 10 comprises a floor 11 and a wall 12.

Fig. 1 further depicts an illumination system, comprising a plurality of illumination devices I mounted to a wall 12 at a mounting height with respect to a floor 11, each illumination device 1 being arranged to, in use, illuminate a predetermined area 13 of the floor, wherein
- the mounting height is between 0,4 and 0,8 meter from the floor 11, and
- the respective predetermined areas 13 of the floor are adjacent or partially overlapping.

The mounting height may be between 0,4 and 0,8 meter, for instance between 0,5 - 0,7 meter, or preferably close to 0,6 meter. This mounting height has several advantages.

Illumination systems according to the state of the art that are mounted to the ceiling do not function optimally in case of smoky conditions, as smoke tends to rise. Also mounting to the ceiling requires a lot of power, making the illumination systems inefficient. Furthermore, state of the art ceiling fixtures may be in the same line as the evacuation fixtures, which results in blinding the sight at the escape signs, especially in long corridors.

This mounting height allows illuminating a part of the floor 11 without requiring much power. In comparison, illumination devices attached to the ceiling relatively require a lot of power to illuminate a part of the floor 11, especially in smoky conditions. In fact, if smoke is relatively thick, illumination devices at the ceiling may be unable to illuminate the floor. Also, illumination devices 1 that are mounted close to the floor 11 or even in the floor 11 can not easily be used to illuminate a substantial part of the floor 11 and surrounding area. So, the indicated mounting height provides an advantageous trade off between relatively high mounting heights (requiring relatively much power) and relatively low mounting heights (requiring relatively many illumination devices 1).

Furthermore, the illumination devices 1 are to be mounted at such a height that a person lying on the ground, such as a wounded or unconscious person, can not block the illumination device, ensuring proper illumination.

The illumination system may be used in a building, such as a hotel, hospital, private house etc. to illuminate an escape route or the like.

According to an embodiment, there is provided an illumination system, wherein the plurality of illumination devices 1 are arranged to switch on in response to a received alarm signal. Alarm signals may be a fire alarm signal, a smoke alarm signal, a power failure alarm signal, an evacuation alarm signal, etc. These alarm signals may be generated automatically or manually by a user.

As an alternative for or as an addition to received alarm signals, the illumination device 1 may be arranged to automatically switch on when appropriate using input from a motion detector 4 and an ambient light detector 5.

So, according to a further embodiment there is provided an illumination system, wherein the plurality of illumination devices 1 comprise
- a motion detector 4 which generates a motion signal in response to detected motion and
- an ambient light detector 5 which generates an ambient light level being an indication of an ambient light level,
wherein the plurality of illumination devices 1 are arranged to switch on the light source 2 in response to the generated motion signal, in case the ambient light level is below a threshold ambient light level.

Of course, a combination of an alarm triggered illumination system and a motion/ambient light triggered illumination system can be conceived.

The illumination system may be arranged such that when a first illumination device 1 detects motion of a user and switches on the light source 2 in response to that, a plurality of neighbouring illumination devices 1 may be switched on as well.

This may be obtained automatically because the motion detector 4 of a second neighbouring illumination device 1 may detect that the light source 2 of the first illumination device 1 has been switched on. This means that the motion detectors 4 of the illumination devices 1 are arranged to generate a detection range that comprises the neighbouring illumination device 1, or at least the light generated by the light source 2 that is generated by the neighbouring illumination device.

The illumination system may be arranged in such a way that the motion detector 4 of an illumination device 1 has a detection range that is able to detect the light generated by a light source 2 of a neighbouring illumination device 1, or at least is arranged to detect motion within the area illuminated by the neighbouring illumination device 1. This ensures that when a user walks through a corridor, the corridor is always illuminated in front of him, and he never needs to enter an area that is not yet illuminated.

Thus, when a user triggers a first illumination device I to switch on the light source 2, the route that he/she has to follow is illuminated right away, providing a safe guidance to the exit.

The detection range may thus be larger, at least in a direction substantial parallel to the wall, than the predetermined area of the floor that is illuminated. The detection range may for instance be twice the size of the predetermined area of the floor that is illuminated.

According to a further embodiment there is provided an illumination system, wherein at least one of the illumination devices 1 is comprises a light source 2 arranged to emit a first colour of light, the first colour being red, orange or orange-red.

White light in smoky conditions has a blinding effect and diminishes contrast. Furthermore, switching on an emergency illumination system with white light may not be associated with an emergency situations by users.

It is found that red, orange and orange-red light has certain advantages in emergency situations, such as in a fire or in smoky conditions. It is discovered that red, orange or orange-red light provides the best visibility for a user in smoky conditions, in particular in situations with organic smoke. The red, orange or orange-red light easily penetrates through the smoke instead of being reflected by the smoke to blind a user.

The colours red, orange or orange-red may be defined by their wavelengths, which may be in the range from 590 - 750nm, or in the range from 600 - 700nm. For instance, the wavelength may be in the range from 590-620 nm with a frequency of approximately 484-508 THz or in the range from 620-750 nm with a frequency of approximately 400-484 THz.

To provide an illumination system that is even better suited to function in emergency conditions such as a fire, there is provided an illumination system, wherein at least one of the further illumination devices 1 comprises a light source 2 arranged to emit a second colour of light, the second colour being different from the first colour.

The second colour may for instance be green (having its wavelength in the range of 495-570 nm (for instance in the range from 500 - 550n,) with a frequency of approximately 526-606 THz). By providing an illumination system with illumination devices 1 emitting different colours, a user may be guided in a desired direction in an intuitional way. According to an example, most illumination devices 1 may be red, orange or orange-red, while the illumination devices 1 in the vicinity of an (emergency) exit may be green such that a user will intuitively follow the red, orange or orange-red lights towards the green light, thus being guided into safety in case of an emergency (e.g. fire).

With reference to Fig. 1, in which the exit is on the left side of the corridor 11 as indicated, this would imply that the illumination devices 1 at the right and the one in the middle both comprise a light source 2 arranged to emit the first colour of light, e.g. red, orange or orange-red, while the illumination device 1 at the left side comprises a light source 2 arranged to emit the second colour of light, e.g. green.

As indicated above, each illumination device 1 is arranged to illuminate a predetermined area of the floor 11, such that the respective predetermined parts of the floor 11 together form an uninterrupted illuminated floor area.

To accomplish this in a corridor, the illumination devices 11 are each arranged to illuminate a predetermined area of the floor 11, each predetermined area having a first length in a direction along the wall and the mutual distance between the mounted illumination devices 1 is equal to or smaller than the first length.

This is schematically shown in Fig. 1, in which predetermined areas 13 are shown substantially rectangular areas. Although Fig. 1 show areas 13 as being non overlapping, it will be understood that the areas 13 may in fact be overlapping areas. Also, the areas 13 are shown as rectangular areas, but it will be understand that the areas may in fact be substantially rectangular or may have other shapes.

By providing a mutual distance between the mounted illumination devices 1 that is equal to or smaller than the first length, an uninterrupted illuminated area is obtained.

According to an embodiment, the first length is approximately 8 meter. The width of the predetermined area on the floor may be approximately 3 meter in a direction substantially perpendicular to the wall 12. The detection range of the motion detector may for instance be approximately 16 meters in a direction substantially parallel to the wall 12.

According to an embodiment, the illumination system comprises illumination devices wherein the illumination devices comprise a motion detector arranged to generate a motion detector beam in a range of approximately 150 - 180°. This may be achieved by an illumination device as described below with reference to Fig.'s 3a, 3b and 4. This has the advantage that the complete surrounding of a mounted illumination device 1 can be monitored. According to a special embodiment, this can be done with a single motion detector.

### Illumination device

Fig. 2a further schematically depicts an illumination device 1. Such an illumination device 1 comprises a light source 2, the illumination device 1 being arranged to be mounted to a wall 12 at a mounting height with respect to a floor 11, the illumination device 1 being arranged to, in use, illuminate a predetermined area of the floor 11, wherein
- the mounting height is between 0,4 and 0,8 meter from the floor, and
- the predetermined area of the floor has a substantial rectangular shape.

The illumination device 1 may be arranged in such a way that the predetermined area of the floor 11 is adjacent to the wall 12 when the illumination device 1 is mounted to the wall 12. The illumination device 1 may be provided with appropriate optical devices, such as lenses and/or mirrors, to achieve this.

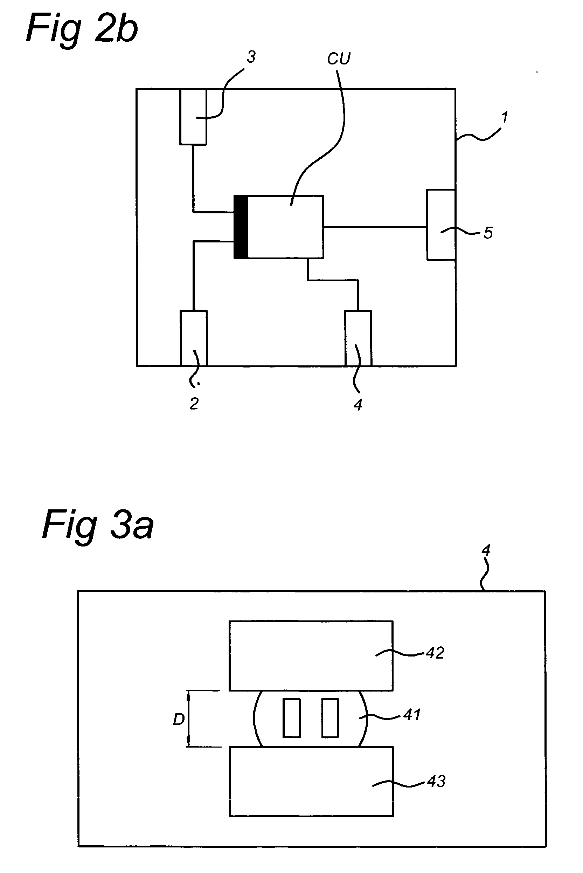

Although not described here in detail, it will be understood that the illumination device 1 may comprise a control unit CU, arranged to communicate with the different elements present in the illumination device 1, to control functioning of the illumination device 1, as schematically shown in Fig. 2b. The control unit CU may comprise hardware elements arranged to provide the illumination device 1 with the functionality according to the embodiments. Alternatively, the illumination device 1 may comprise a memory (not shown), comprising programming lines that are readable and executable by the control unit CU to function according to the embodiments.

Although not shown for reasons of clarity, it will be understood that the illumination device 1 may comprise energy means, such as a battery or a connection to an outside energy source, such the lighting system. The battery or the like may be arranged to provide the illumination device 1 with energy to function for at least 1 hour.

According to an embodiment, the illumination device 1 may comprise a connection to an outside energy source (such as lightning circuit) as well as a battery or the like. In fact, the illumination device 1 may be arranged to switch on the light source 2 using energy from the battery when it is noticed that the outside energy source is interrupted, for instance due to a power failure.

By mounting the illumination device on the wall 12 as described in the embodiments, the illumination device can simply be connected to the normal lightning circuit as an outside energy source.

According to an embodiment, the illumination device 1 is arranged to illuminate a predetermined area of the floor from the mounting height, the predetermined area having a length of approximately 8 meter in a direction along the wall 12. The width of the predetermined area of the floor may be approximately 3 meter in a direction substantially perpendicular to the wall 12.

According to an embodiment, the illumination device 1 is arranged to switch on in response to a received alarm signal. The illumination device 1 thus comprises an input 3 to receive such an alarm signal and to be connected to for instance a central emergency system, such as a fire alarm.

According to an embodiment, the illumination device 1 comprises
- a motion detector 4 which generates a motion signal in response to detected motion and
- an ambient light detector 5 which generates an ambient light level being an indication of an ambient light level,
wherein the illumination device 1 is arranged to switch on the light source 2 in response to the generated motion signal, in case the ambient light level is below a threshold ambient light level.

So, instead of only switching on in response to power failure or an alarm signal, the illumination device 1 according to this embodiment will also automatically switch on when necessary.

As the illumination device 1 is arranged to be mounted to a wall 12, according to an embodiment it is arranged to detect motion in a range of more than 150°, preferably approximately 180°. In order to achieve this, a motion detector beam is to be generated within such a range. This may be achieved by using motion detector mirrors to direct a motion detection beam generated by a motion detector to cover such a range. An example of this is schematically depicted in Fig.'s 3a and 3b, respectively showing a front and a top view of the motion detector.

So, according to an embodiment, the illumination device may comprise a motion detector 4 arranged to generate a motion detector beam, the illumination device 1 further comprising a first and a second motion detector mirror 42, 43,
the first motion detector mirror 42 being positioned to reflect a first part of the motion detector beam to create a first motion detector plane I,
the second motion detector mirror 43 being positioned to reflect a second part of the motion detector beam to create a second motion detector plane II,
the first and second motion detector mirror 42, 43 being positioned such to allow a third part of the motion detector beam to pass the first and second motion detector mirror 42, 43, to create a third motion detector plate III. For instance, the first and second motion detector mirrors 42, 43 may be positioned at a mutual distance D to allow a third part of the motion detector beam to pass in between the first and second motion detector mirror 42, 43 to create a third motion detector plane III. According to a further variant, the third part of the motion detector beam can pass above or below the first and second motion detector mirror 42, 43.

The motion detector 4 may comprise an infrared detector 41, such as a passive infrared sensor (PIR sensor), arranged to generate an infrared motion detector beam. The motion detector 4 may be positioned inside the illumination device 1 such that when the illumination device 1 is mounted to the wall 12, the motion detection beam is produced in a direction substantially perpendicular with respect to the wall 12.

The motion detector 4 comprises windows 44 to allow the first, second and third motion detector planes I, II, III to leave the motion detector 4.

When the illumination device 1 is mounted to the wall 12, the first and second motion detector mirrors 42, 43 may be in a vertical position, rotated about an angle α of approximately 30 - 60° with respect to a parallel orientation to the wall 12, with their mirroring surfaces faced to the wall and the motion detector. The first and second motion detector mirrors 42, 43 are each rotated about an opposite angle.

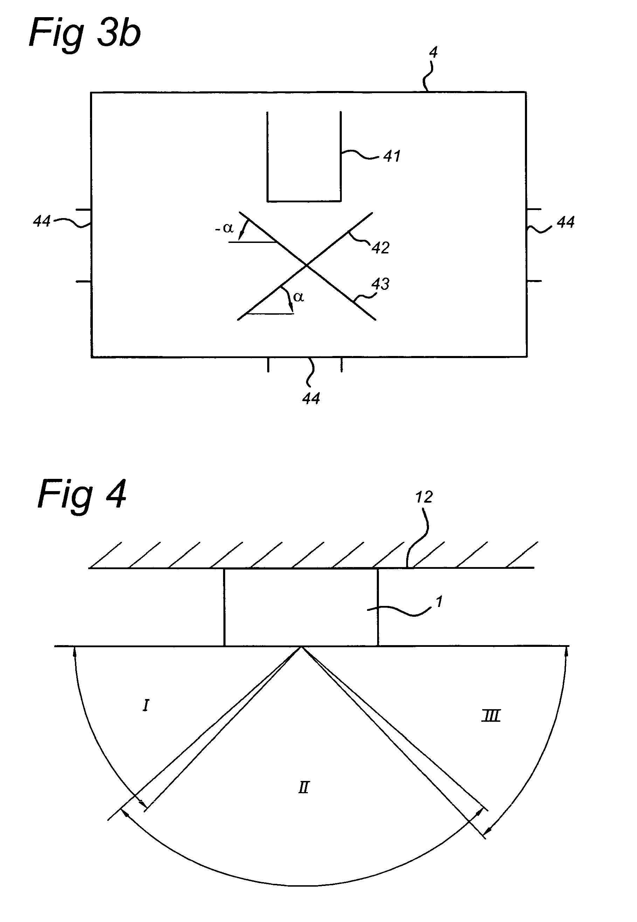

Fig. 4 schematically depicts a top view of an illumination device 1 mounted to the wall 12, showing first motion detector plane I, second motion detector plane II and third motion detector plane III. The first, second and third motion detector planes I, II, III overlap to form a continuous motion detection plane.

Other embodiments may be conceived as well, for instance embodiments without motion detector mirrors 42, 43, but which comprise more than one, for instance two, passive infrared sensor (PIR sensor). The different passive infrared sensors may be positioned at a relative angle. Such an embodiment is arranged to create two motion detector beams to create a first motion detector plane and a second motion detector plane, which together are able to detect motion in a range of more than 150°, preferably approximately 180°.

The described embodiments create a motion detector with a motion detection range covering approximately 180° about zenith or more, which is advantageously in a situation wherein the illumination device 1 is mounted to a wall 12. The term approximately 180° may refer to a range of 175° - 185°, or 188° - 192°. In fact, a motion detector with a motion detection range over 180° about zenith may be provided as well.

In contrast to prior art solutions, the illumination device 1 comprising the motion detector can be mounted to a wall halfway a corridor, and there is no need to mount it in a corner as only a limited motion detection range can be provided, while according to at least one embodiment, only a single PIR sensor is needed to detect motion in the complete vicinity of the illumination device 1.

According to a further embodiment, the illumination device 1 comprises a light source 2 arranged to emit a first colour of light, the first colour being red, orange or orange-red.

According to a further embodiment, the illumination device 1 comprises a light source 2 arranged to emit a second colour of light, the second colour being different from the first colour.

As described above, the first colour may be red, for instance in the range: 620-750 nm with a frequency of approximately 400-484 THz. and the second colour may be green in the range: 495-570 nm with a frequency of approximately 526-606 THz. The first colour may also be red, orange or orange-red, in the range of 590-620 nm with a frequency of approximately 484-508 THz or in the range from 620-750 nm with a frequency of approximately 400-484 THz. These different illumination devices 1 may be suitable for use in an illumination system as described above, having different colours at different locations.

The illumination device may be arranged to be triggered by detected movement.

The illumination device 1 may comprise at least one light source 2 and at least one mirror, the at least one mirror being positioned to reflect light generated by the light source 2 to the predetermined area 13 of the floor 11. For instance, the illumination device 1 may comprise one light source 2 and a first and a second mirror, the first mirror being positioned to reflect a first part of the light generated by the light source 2 to a first part of the predetermined area of the floor, the second mirror being positioned to reflect a second part of the light generated by the light source 2 to a second part of the predetermined area of the floor. Possibly, the first and second mirror being positioned such that a third part of the light generated by the light source 2 can travel in between or above or below the first and second mirrors to illuminate a third part of the predetermined area of the floor. The first, second and third part may together form the predetermined area 13 of the floor 11. The first, second and third parts may be partially overlapping.

This allows to illuminate a relatively large predetermined area of the floor with a single light source and relatively easy optical devices, such as mirrors.
The illumination device 1 may further comprise appropriate lenses, apertures, diaphragms and the like to illuminate the predetermined area on the floor.

According to an embodiment, the illumination device 1 may comprise two light sources, each having an associated mirror. The two light sources and two mirrors both are arranged to illuminate different parts of the floor, together forming the predetermined area 13 of the floor 11.

The illumination device 1 may comprise a self-test function, which is arranged to test the functioning of the energy means, such as the battery or the connection to an outside energy source, such as the lighting system. In case the energy means are not sufficient, e.g. a low battery, the illumination device 1 may be arranged to generate an appropriate signal, for instance by using an appropriate light source. For instance, the direction indicators, which will be described in more detail below, may be used to indicate a problem with the energy means.

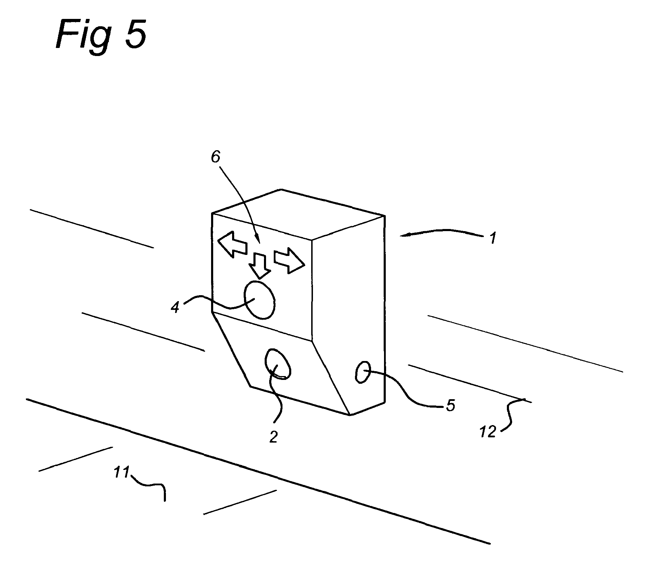

Fig. 5 schematically depicts a further embodiment of an illumination device 1, wherein the illumination device 1 further comprises a plurality of direction indicators 6, here shaped as arrows. According to the example shown in Fig. 5, three direction indicators are provided, one to the left, one to the right and one in a downward direction (indicating a forward direction to a user). Of course, any suitable number of direction indicators 6 in any suitable direction may be provided. For instance, four direction indicators 6 may be provided: one to the left, one to the right, one in downward direction and one in upward direction.

The direction indicators 6 may be provided as transparent elements behind which a light source is positioned.

In case the illumination device I is used in an emergency situation, for instance when switched on in response to a received alarm signal, the illumination device 1 may be arranged to switch on one of the direction indicators 6 to guide users to the appropriate exit. The illumination device 1 may also be arranged to switch on two or more of the direction indicators 6, in case more than one appropriate exit or escape route is available. Selecting the appropriate direction indicator 6 may be done in a static way or in a dynamic way, as will be explained below.

The selection of the appropriate direction indicator 6 may be made when the illumination device 1 is mounted to the wall 12. Based on the location of the nearest exit, the installer may set the illumination device 1 such that the appropriate location indicator is enabled, while the other location indicators are disabled.

This may be done in many appropriate ways, for instance by only installing a light source directly behind the selected direction indicator or by installing a single light source behind all direction indicators and blocking the transparent shapes of the indicators that are not selected.

According to this embodiment, a single type of illumination device 1 can be used for directing users in different directions. The decision to which direction users are to be guided can be taken when installing the illumination device 1.

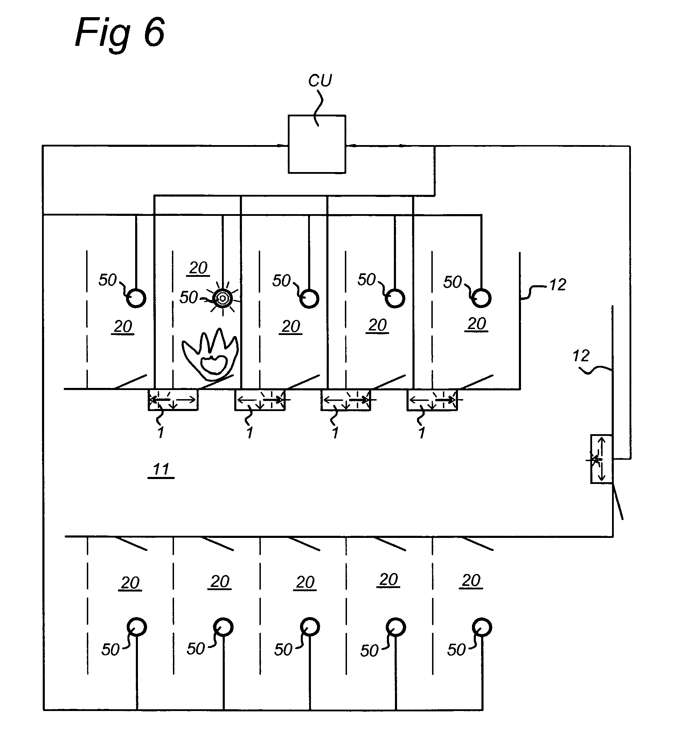

According to an alternative embodiment, the selection of the appropriate direction indicator 6 can be made in a dynamic way, i.e. depending on the emergency situation. The illumination device 1 is arranged to select the appropriate direction indicator in response to a received direction indicator selection signal. This allows remotely controlling the illumination device 1. This is explained with reference to Fig. 6.

Fig. 6 schematically depicts a plan view of a part of a building, comprising a number of rooms 20, each room comprising a smoke detector 50. The corridor is provided with a number of illumination devices 1 as described with reference to Fig. 5, mounted on the wall 12.

The smoke detectors 50 and the illumination devices 1 are all connected to a control unit CU. The control unit CU may be a computer arrangement programmed to function in accordance with the embodiments.

As schematically shown in Fig. 6, in one of the rooms 20 there is a fire, resulting in an alarm signal generated by the smoke detector 50 in that room. This smoke detector 50 may be arranged to transmit the alarm signal to the control unit CU. Based on the received alarm signal, the control unit CU may be arranged to generate and transmit a direction indicator selection signal to individual illumination devices 1 instructing the illumination devices 1 which one of the plurality of direction indicators is to be used. The connection between the illumination devices I and the control unit CU is not always shown in Fig. 6 for reasons of clarity. These connections may be wired connections and/or wireless connections.

The illumination devices 1 may be arranged to receive such a direction indicator selection signal and process such instructions to select the appropriate direction indicator 6.

As shown in Fig. 6, the different illumination devices 1 switch on a direction indicator 6 pointing away from the fire and towards the safest exit.

According to the example provided here, the alarm signal is generated by a smoke detector 50. However, alarm signals may also be generated by other means, such as manual operated fire alarms or the like.

The control unit CU may function automatically in response to a received alarm signal. However, in addition or as an alternative, the control unit CU may be operated by a controller who can manually initiate generating and transmitting of a direction indicator selection signal. The operator may thus manually control each illumination device 1.

Summarizing the embodiments described with reference to Fig.'s 5 and 6, there is provided an illumination device, wherein the illumination device further comprises a plurality of direction indicators, the illumination device being arranged to make a selection of at least one of the plurality of direction indicators to be used. The selection of one of the plurality of direction indicators can be made in a static way upon installation of the illumination device. According to an alternative, the illumination device comprises an input for receiving a direction indicator selection signal, and the selection of one of the plurality of direction indicators is made in a dynamic way based on a received direction indicator selection signal.

Furthermore there is provided an illumination system, wherein the plurality of illumination devices further comprise a plurality of direction indicators, the illumination device being arranged to make a selection of at least one of the plurality of direction indicators to use. The selection of one of the plurality of direction indicators is made in a static way upon installation of the illumination device. According to an alternative, the illumination system further comprises a control unit arranged to generate a plurality of direction indicator selection signals based on a received alarm signal for the respective illumination devices and transmit the direction indicator selection signals to the respective illumination devices, wherein the illumination devices comprise an input for receiving a direction indicator selection signal, and the selection of one of the plurality of direction indicators is made in a dynamic way based on a received direction indicator selection signal.

According to an embodiment, the selected direction indicator may always be illuminated, so users are made familiar with the appropriate standard escape route already in a case there is no emergency (non-emergency situation). Of course, in case of an emergency situation (e.g. indicated by an alarm signal), such as a fire along the standard escape route, the selection of the direction indicator may be changed dynamically.

According to a further embodiment, the selection of direction indicators may comprise more than one direction indicator, in case more than one route is appropriate. This applies to an emergency situation, as well as to a non-emergency situation.

The housing of the illumination device 1 may be water resistant, such to ensure functioning of the illumination device 1 even when exposed to fire extinguishing water.

### Further remarks

Also provided are embodiments for a corridor and building comprising an illumination system according to the embodiments described.

It will be understood that some embodiments of the illumination systems are not only suitable for use as emergency-, anti-panic, flight route and/or evacuation illumination, but may also be used for regular illumination purposes.

For instance, the embodiments comprising motion detectors my serve as illumination system and illumination devices in hotels to provide guests with a subtle and energy efficient way of illumination in dark circumstances. In order to do this, the illumination devices 1 may be provided with a light source of white light. Alternatively, the illumination devices may be provided with at least two light sources: one with white light for a non-emergency situation and one with coloured light, such as for instance red, orange or orange-red light, for an emergency situation. The term coloured light is used to indicate light that is not white light, for instance light that comprises a single wavelength (monochromatic) or comprises only light within a limited bandwidth, for instance a bandwidth of 10, 50 or 100 nm. The illumination device may switch from a non-emergency situation to an emergence situation by receiving an alarm signal.

The embodiments provided above provide at least one of the following advantages:
- the use of coloured light, e.g. two colours, such as red and green, ensures better visibility and intuitive guidance towards the exit,
- direction is indicated on the illumination devices,
- also operational when electricity is down but visibility is poor because of smoke,
- water resistant (for fire extinguishing water)
- no blinding effect by using red, orange or orange-red light,
- retention of contrasts by using red, orange or orange-red light,
- red, orange or orange-red light makes people more alert,
- energy saving due to relatively low amount of power needed,
- can be fitted directly on existing electrical wiring,
- the provided embodiments are suitable for use in smaller places and private applications.

The descriptions above are intended to be illustrative, not limiting. Thus, it will be apparent to one skilled in the art that modifications may be made to the invention as described without departing from the scope of the claims set out below.

## Claims

1. Emergency, anti-panic, flight route and/or evacuation illumination device comprising a light source, the illumination device being arranged to be mounted to a wall at a mounting height with respect to a floor, the illumination device being arranged to, in use, illuminate a predetermined area of the floor,
- the predetermined area of the floor has a substantial rectangular shape, and
wherein the illumination device comprises
- a motion detector which generates a motion signal in response to detected motion, and
- an ambient light detector which generates an ambient light level being an indication of an ambient light level; **characterized in that**
the illumination device is arranged to switch on the light source in response to the generated motion signal, in case the ambient light level is below a threshold ambient light level,
wherein the illumination device is arranged to switch on in response to a received alarm signal, and
wherein the illumination device comprises a light source arranged to emit a first colour of light, the first colour being red, orange or orange-red.

2. Emergency, anti-panic, flight route and/or evacuation illumination device according to claim 1, wherein the mounting height is between 0,4 and 0,8 meter from the floor.

3. Emergency, anti-panic, flight route and/or evacuation illumination device according to claim 1 or 2, wherein the illumination device is arranged to illuminate a predetermined area of the floor from the mounting height, the predetermined area having a length of approximately 8 meter in a direction along the wall and a width of approximately 3 meter in a direction substantially perpendicular to the wall.

4. Emergency, anti-panic, flight route and/or evacuation illumination device according to any one of the claims 1 - 3, wherein the illumination device comprises a light source arranged to emit a second colour of light, the second colour being different from the first colour.

5. Emergency, anti-panic, flight route and/or evacuation illumination device according to any one of the claims 1 - 4, wherein the illumination device comprises a motion detector arranged to generate a motion detector beam, the illumination device further comprising a first and a second motion detector mirror,
the first motion detector mirror being positioned to reflect a first part of the motion detector beam to create a first motion detector plane,
the second motion detector mirror being positioned to reflect a second part of the motion detector beam to create a second motion detector plane,
the first and second motion detector mirror being positioned such to allow a third part of the motion detector beam to pass the first and second motion detector mirror (42, 43), to create a third motion detector plate III.

6. Emergency, anti-panic, flight route and/or evacuation illumination device according to any one of the preceding claims, wherein the illumination device further comprises a plurality of direction indicators, the illumination device being arranged to make a selection of at least one of the plurality of direction indicators to be used.

7. Emergency, anti-panic, flight route and/or evacuation illumination device according to claim 6, wherein the selection of one of the plurality of direction indicators is made in a static way upon installation of the illumination device.

8. Emergency, anti-panic, flight route and/or evacuation illumination device according to claim 7, wherein the illumination device comprises an input for receiving a direction indicator selection signal, and the selection of one of the plurality of direction indicators is made in a dynamic way based on a received direction indicator selection signal.

9. Illumination system, comprising a plurality of emergency, anti-panic, flight route and/or evacuation illumination devices mounted to a wall at a mounting height with respect to a floor, each illumination device being arranged to, in use, illuminate a predetermined area of the floor,
wherein the plurality of illumination devices comprises
- a motion detector which generates a motion signal in response to detected motion, and
- an ambient light detector which generates an ambient light level being an indication of an ambient light level;
wherein the plurality of illumination devices are arranged to switch on the light source in response to the generated motion signal, in case the ambient light level is below a threshold ambient light level, **characterised in that** illumination device is arranged to switch on in response to a received alarm signal, and
- the respective predetermined areas of the floor are adjacent or partially overlapping, and
wherein the illumination device comprises a light source arranged to emit a first colour of light, the first colour being red, orange or orange-red.

10. Illumination system according to claim 9, wherein the
illumination device further comprising a first and a second motion detector mirror,
the first motion detector mirror being positioned to reflect a first part of the motion detector beam to create a first motion detector plane,
the second motion detector mirror being positioned to reflect a second part of the motion detector beam to create a second motion detector plane,
the first and second motion detector mirror being positioned at a mutual distance to allow a third part of the motion detector beam to pass in between the first and second motion detector mirror to create a third motion detector plane.

11. Illumination system according to any one of the claims 9 - 10, wherein the plurality of illumination devices further comprise a plurality of direction indicators, the illumination device being arranged to make a selection of at least one of the plurality of direction indicators to use.

12. Illumination system according to claim 11, wherein the selection of one of the plurality of direction indicators is made in a static way upon installation of the illumination device.

13. Illumination system according to claim 11, the illumination system further comprising a control unit arranged to generate a plurality of direction indicator selection signals based on a received alarm signal for the respective illumination devices and transmit the direction indicator selection signals to the respective illumination devices,
wherein the illumination devices comprise an input for receiving a direction indicator selection signal, and the selection of one of the plurality of direction indicators is made in a dynamic way based on a received direction indicator selection signal.

14. Corridor comprising an illumination system according to any one of the claims 9 - 13.

15. Building comprising an illumination system according to any one of the claims 9 - 13.

## Patentansprüche

1. Notfall-, Antipanik-, Fluchtweg- und/oder Evakuierungs-Beleuchtungsvorrichtung, umfassend eine Lichtquelle, wobei die Beleuchtungsvorrichtung dazu eingerichtet ist, an einer Wand in einer Befestigungshöhe in Bezug auf einen Fußboden angebracht zu werden, und die Beleuchtungsvorrichtung dazu eingerichtet ist, in Benutzung eine vorbestimmte Fläche des Fußboden zu beleuchten,
- die vorbestimmte Fläche des Fußbodens eine im wesentlichen rechteckige Form hat und die Beleuchtungsvorrichtung umfasst
- einen Bewegungsdetektor, der ein Bewegungssignal in Erwiderung auf erfasste Bewegung erzeugt, und
- einen Umgebungslichtdetektor, der einen Umgebungslichtpegel erzeugt, der eine Kennzeichnung eines Umgebungslichtpegels ist;
**dadurch gekennzeichnet, dass** die Beleuchtungsvorrichtung dazu eingerichtet ist, die Lichtquelle in Erwiderung auf das erzeugte Bewegungssignal einzuschalten, für den Fall, dass der Umgebungslichtpegel unter einem Umgebungslicht-Schwellenwertpegel liegt,
wobei die Beleuchtungsvorrichtung dazu eingerichtet ist, sich in Erwiderung auf ein empfangenes Alarmsignal einzuschalten, und
die Beleuchtungsvorrichtung eine Lichtquelle umfasst, die dazu eingerichtet ist, eine erste Farbe von Licht zu emittieren, wobei die erste Farbe rot, orange oder orangerot ist.

2. Notfall-, Antipanik-, Fluchtweg- und/oder Evakuierungs-Beleuchtungsvorrichtung nach Anspruch 1, bei der sich die Befestigungshöhe zwischen 0,4 und 0,8 Meter über dem Fußboden befindet.

3. Notfall-, Antipanik-, Fluchtweg- und/oder Evakuierungs-Beleuchtungsvorrichtung nach Anspruch 1 oder 2, bei der die Beleuchtungsvorrichtung dazu eingerichtet ist, eine vorbestimmte Fläche des Fußbodens von der Befestigungshöhe zu beleuchten, wobei die vorbestimmte Fläche eine Länge von etwa 8 Metern in einer Richtung entlang der Wand und eine Breite von etwa 3 Metern in einer Richtung hat, die im wesentlichen senkrecht zu der Wand ist.

4. Notfall-, Antipanik-, Fluchtweg- und/oder Evakuierungs-Beleuchtungsvorrichtung nach einem der Ansprüche 1 bis 3, bei der die Beleuchtungsvorrichtung eine Lichtquelle umfasst, die dazu eingerichtet ist, eine zweite Farbe von Licht zu emittieren, wobei sich die zweite Farbe von der ersten Farbe unterscheidet.

5. Notfall-, Antipanik-, Fluchtweg- und/oder Evakuierungs-Beleuchtungsvorrichtung nach einem der Ansprüche 1 bis 4, bei der die Beleuchtungsvorrichtung einen Bewegungsdetektor umfasst, der dazu eingerichtet ist, einen Bewegungsdetektorstrahl zu erzeugen, wobei die Beleuchtungsvorrichtung weiterhin einen ersten und einen zweiten Bewegungsdetektorspiegel umfasst,
der erste Bewegungsdetektorspiegel derart angeordnet ist, dass er einen ersten Teil des Bewegungsdetektorstrahls erfasst, um eine erste Bewegungsdetektorebene zu erzeugen,
der zweite Bewegungsdetektorspiegel derart angeordnet ist, dass er einen zweiten Teil des Bewegungsdetektorstrahls reflektiert, um eine zweite Bewegungsdetektorebene zu erzeugen, und
der erste sowie der zweite Bewegungsdetektorspiegel derart angeordnet sind, dass es einem dritten Teil des Bewegungsdetektorstrahls gestattet ist, den ersten und zweiten Bewegungsdetektorspiegel (42, 43) zu durchlaufen, um eine dritte Bewegungsdetektorebene III zu erzeugen.

6. Notfall-, Antipanik-, Fluchtweg- und/oder Evakuierungs-Beleuchtungsvorrichtung nach einem der vorhergehenden Ansprüche, bei der die Beleuchtungsvorrichtung weiterhin eine Vielzahl von Richtungsanzeigern umfasst, wobei die Beleuchtungsvorrichtung dazu eingerichtet ist, eine Auswahl wenigstens eines aus der Vielzahl von Richtungsanzeigern zu treffen, der verwendet werden soll.

7. Notfall-, Antipanik-, Fluchtweg- und/oder Evakuierungs-Beleuchtungsvorrichtung nach Anspruch 6, bei der die Auswahl eines aus der Vielzahl von Richtungsanzeigern auf statischem Wege bei Installation der Beleuchtungsvorrichtung getroffen wird.

8. Notfall-, Antipanik-, Fluchtweg- und/oder Evakuierungs-Beleuchtungsvorrichtung nach Anspruch 7, bei der die Beleuchtungsvorrichtung einen Eingang zum Empfangen eines Richtungsanzeiger-Auswählsignals umfasst und die Auswahl eines aus der Vielzahl von Richtungsanzeigern auf dynamischem Wege auf der Basis eines empfangenen Richtungsanzeiger-Auswählsignals getroffen wird.

9. Beleuchtungssystem, umfassend eine Vielzahl von Notfall-, Antipanik-, Fluchtweg- und/oder Evakuierungs-Beleuchtungsvorrichtungen, die an einer Wand in einer Befestigungshöhe in Bezug auf einen Fußboden angebracht sind, wobei jede Beleuchtungsvorrichtung dazu eingerichtet ist, in Verwendung eine vorbestimmte Fläche des Fußbodens zu beleuchten,
wobei die Vielzahl von Beleuchtungsvorrichtungen umfasst:
- einen Bewegungsdetektor, der ein Bewegungssignal in Erwiderung auf erfasste Bewegung erzeugt, und
- einen Umgebungslichtdetektor, der einen Umgebungslichtpegel erzeugt, der eine Kennzeichnung eines Umgebungslichtpegels ist;
wobei die Vielzahl von Beleuchtungsvorrichtungen dazu eingerichtet ist, die Lichtquelle in Erwiderung auf das erzeugte Bewegungssignal einzuschalten, für den Fall, dass der Umgebungslichtpegel unter einem Umgebungslicht-Schwellenwertpegel liegt, **dadurch gekennzeichnet, dass** die Beleuchtungsvorrichtung dazu eingerichtet ist, sich in Erwiderung auf ein empfangenes Alarmsignal einzuschalten, und
- die entsprechenden vorbestimmten Flächen des Fußbodens benachbart sind oder einander überlappen und
die Beleuchtungsvorrichtung eine Lichtquelle umfasst, die dazu eingerichtet ist, eine erste Farbe von Licht zu emittieren, wobei die erste Farbe rot, orange oder orangerot ist.

10. Beleuchtungssystem nach Anspruch 9, bei dem die Beleuchtungsvorrichtung weiterhin einen ersten und einen zweiten Bewegungsdetektorspiegel umfasst,
der erste Bewegungsdetektorspiegel derart angeordnet ist, dass er einen ersten Teil des Bewegungsdetektorstrahls reflektiert, um eine erste Bewegungsdetektorebene zu erzeugen,
der zweite Bewegungsdetektorspiegel derart angeordnet ist, dass er einen zweiten Teil des Bewegungsdetektorstrahls reflektiert, um eine zweite Bewegungsdetektorebene zu erzeugen, und
der erste sowie der zweite Bewegungsdetektorspiegel in einem gegenseitigen Abstand derart angeordnet sind, dass es einem dritten Teil des Bewegungsdetektorstrahls gestattet ist, zwischen dem ersten und dem zweiten Bewegungsdetektorspiegel hindurchzulaufen, um eine dritte Bewegungsdetektorebene zu erzeugen.

11. Beleuchtungssystem nach einem der Ansprüche 9 bis 10, bei dem die Vielzahl von Beleuchtungsvorrichtungen weiterhin eine Vielzahl von Richtungsanzeigern umfasst, wobei die Beleuchtungsvorrichtung dazu eingerichtet ist, eine Auswahl wenigstens eines aus der Vielzahl von Richtungsanzeigern zu treffen, der verwendet werden soll.

12. Beleuchtungssystem nach Anspruch 11, bei dem die Auswahl eines aus der Vielzahl von Richtungsanzeigern auf statischem Wege bei Installation der Beleuchtungsvorrichtung getroffen wird.

13. Beleuchtungssystem nach Anspruch 11, wobei das Beleuchtungssystem weiterhin eine Steuereinheit umfasst, die dazu eingerichtet ist, eine Vielzahl von Richtungsanzeiger-Auswählsignalen auf der Basis eines empfangenen Alarmsignals für die entsprechenden Beleuchtungsvorrichtungen zu erzeugen und die Richtungsanzeiger-Auswählsignale zu den entsprechenden Beleuchtungsvorrichtungen zu senden,
wobei die Beleuchtungsvorrichtungen einen Eingang zum Empfangen eines Richtungsanzeiger-Auswählsignals umfassen und die Auswahl eines aus der Vielzahl von Richtungsanzeigern auf dynamischem Wege auf der Basis eines empfangenen Richtungsanzeiger-Auswählsignals getroffen wird.

14. Flur, umfassend ein Beleuchtungssystem nach einem der Ansprüche 9 bis 13.

15. Gebäude, das ein Beleuchtungssystem nach einem der Ansprüche 9 bis 13 enthält.

## Revendications

1. Dispositif d'éclairage d'urgence, anti-panique, de trajet et/ou d'évacuation comprenant une source de lumière, le dispositif d'éclairage étant agencé pour être monté sur un mur à une hauteur de montage par rapport au sol, le dispositif d'éclairage étant agencé, en utilisation, pour éclairer une zone prédéterminée du sol,
- la zone prédéterminée du sol ayant une forme sensiblement rectangulaire, et
dans lequel le dispositif d'éclairage comprend
- un détecteur de mouvement qui génère un signal de mouvement en réponse à un mouvement détecté, et
- un détecteur de lumière ambiante qui génère un niveau de lumière ambiante qui est une indication d'un niveau de lumière ambiante ; **caractérisé en ce que**
le dispositif d'éclairage est agencé pour activer la source de lumière en réponse au signal de mouvement généré, dans le cas où le niveau de lumière ambiante est inférieur à un niveau de seuil de lumière ambiante,
dans lequel le dispositif d'éclairage est agencé pour s'activer en réponse à un signal d'alarme reçu, et
dans lequel le dispositif d'éclairage comprend une source de lumière agencée pour émettre une première couleur de lumière, la première couleur étant rouge, orange ou orange-rouge.

2. Dispositif d'éclairage d'urgence, anti-panique, de trajet et/ou d'évacuation selon la revendication 1, dans lequel la hauteur de montage est entre 0,4 et 0,8 m du sol.

3. Dispositif d'éclairage d'urgence, anti-panique, de trajet et/ou d'évacuation selon la revendication 1 ou 2, dans lequel le dispositif d'éclairage est agencé pour éclairer une zone prédéterminée du sol à partir de la hauteur de montage, la zone prédéterminée ayant une longueur d'environ 8 m dans une direction le long du mur et une largeur d'environ 3 m dans une direction sensiblement perpendiculaire au mur.

4. Dispositif d'éclairage d'urgence, anti-panique, de trajet et/ou d'évacuation selon l'une quelconque des revendications 1 à 3, dans lequel le dispositif d'éclairage comprend une source de lumière agencée pour émettre une deuxième couleur de lumière, la deuxième couleur étant différente de la première couleur.

5. Dispositif d'éclairage d'urgence, anti-panique, de trajet et/ou d'évacuation selon l'une quelconque des revendications 1 à 4, dans lequel le dispositif d'éclairage comprend un détecteur de mouvement agencé pour générer un faisceau de détecteur de mouvement, le dispositif d'éclairage comprenant en outre des premier et deuxième miroirs de détecteur de mouvement,
le premier miroir de détecteur de mouvement étant positionné pour réfléchir une première partie du faisceau de détecteur de mouvement pour créer un premier plan de détecteur de mouvement,
le deuxième miroir de détecteur de mouvement étant positionné pour réfléchir une deuxième partie du faisceau de détecteur de mouvement pour créer un deuxième plan de détecteur de mouvement,
les premier et deuxième miroirs de détecteur de mouvement étant positionnés de manière à permettre à une troisième partie du faisceau de détecteur de mouvement de passer entre les premier et deuxième miroirs de détecteur de mouvement (42, 43), pour créer un troisième plan de détecteur de mouvement III.

6. Dispositif d'éclairage d'urgence, anti-panique, de trajet et/ou d'évacuation selon l'une quelconque des revendications précédentes, dans lequel le dispositif d'éclairage comprend en outre une pluralité d'indicateurs de direction, le dispositif d'éclairage étant agencé pour effectuer une sélection d'au moins l'un de la pluralité d'indicateurs de direction à utiliser.

7. Dispositif d'éclairage d'urgence, anti-panique, de trajet et/ou d'évacuation selon la revendication 6, dans lequel la sélection de l'un de la pluralité d'indicateurs de direction est effectuée d'une manière statique lors de l'installation du dispositif d'éclairage.

8. Dispositif d'éclairage d'urgence, anti-panique, de trajet et/ou d'évacuation selon la revendication 7, dans lequel le dispositif d'éclairage comprend une entrée pour recevoir un signal de sélection d'indicateur de direction, et la sélection de l'un de la pluralité d'indicateurs de direction est effectuée d'une manière dynamique sur la base d'un signal de sélection d'indicateur de direction reçu.

9. Système d'éclairage, comprenant une pluralité de dispositifs d'éclairage d'urgence, anti-panique, de trajet et/ou d'évacuation montés sur un mur à une hauteur de montage par rapport à un sol, chaque dispositif d'éclairage étant agencé, en utilisation, pour éclairer une zone prédéterminée du sol,
dans lequel la pluralité de dispositifs d'éclairage comprend
- un détecteur de mouvement qui génère un signal de mouvement en réponse à un mouvement détecté, et
- un détecteur de lumière ambiante qui génère un niveau de lumière ambiante qui est une indication d'un niveau de lumière ambiante ;
dans lequel la pluralité de dispositifs d'éclairage sont agencés pour activer la source de lumière en réponse au signal de mouvement généré, dans le cas où le niveau de lumière ambiante est au-dessous d'un niveau de seuil de lumière ambiante, **caractérisé en ce que** le dispositif d'éclairage est agencé pour s'activer en réponse à un signal d'alarme reçu, et les zones prédéterminées respectives du sol sont adjacentes ou se superposent partiellement, et
dans lequel le dispositif d'éclairage comprend une source de lumière agencée pour émettre une première couleur de lumière, la première couleur étant rouge, orange ou orange-rouge.

10. Système d'éclairage selon la revendication 9, dans lequel
le dispositif d'éclairage comprend en outre des premier et deuxième miroirs de détecteur de mouvement, le premier miroir de détecteur de mouvement étant positionné pour réfléchir une première partie du faisceau de détecteur de mouvement pour créer un premier plan de détecteur de mouvement,
le deuxième miroir de détecteur de mouvement étant positionné pour réfléchir une deuxième partie du faisceau de détecteur de mouvement pour créer un deuxième plan de détecteur de mouvement,
les premier et deuxième miroirs de détecteur de mouvement étant positionnés à une distance mutuelle pour permettre à une troisième partie du faisceau de détecteur de mouvement de passer entre les premier et deuxième miroirs de détecteur de mouvement pour créer un troisième plan de détecteur de mouvement.

11. Système d'éclairage selon l'une quelconque des revendications 9 à 10, dans lequel la pluralité de dispositifs d'éclairage comprend en outre une pluralité d'indicateurs de direction, le dispositif d'éclairage étant agencé pour effectuer une sélection d'au moins l'un de la pluralité d'indicateurs de direction à utiliser.

12. Système d'éclairage selon la revendication 11, dans lequel la sélection de l'un de la pluralité d'indicateurs de direction est effectuée d'une manière statique lors de l'installation du dispositif d'éclairage.

13. Système d'éclairage selon la revendication 11, le système d'éclairage comprenant en outre une unité de commande agencée pour générer une pluralité de signaux de sélection d'indicateur de direction sur la base d'un signal d'alarme reçu pour les dispositifs d'éclairage respectifs et transmettre les signaux de sélection d'indicateur de direction aux dispositifs d'éclairage respectifs,
dans lequel les dispositifs d'éclairage comprennent une entrée pour recevoir un signal de sélection d'indicateur de direction, et la sélection de l'un de la pluralité d'indicateurs de direction est effectuée d'une manière dynamique sur la base d'un signal de sélection d'indicateur de direction reçu.

14. Couloir comprenant un système d'éclairage selon l'une quelconque des revendications 9 à 13.

15. Bâtiment comprenant un système d'éclairage selon l'une quelconque des revendications 9 à 13.
